(19) Europäisches Patentamt
European Patent Office
Office européen des brevets

(11) **EP 3 943 896 A1**

(12) **EUROPÄISCHE PATENTANMELDUNG**

(43) Veröffentlichungstag:
**26.01.2022 Patentblatt 2022/04**

(51) Internationale Patentklassifikation (IPC):
*G01G 11/00* *(2006.01)*

(21) Anmeldenummer: 20187210.8

(52) Gemeinsame Patentklassifikation (CPC):
**G01G 11/00**

(22) Anmeldetag: **22.07.2020**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **IBAU Hamburg Ingenieurgesellschaft
20459 Hamburg (DE)**

(72) Erfinder: **APPENZELLER, Marco
20535 Hamburg (DE)**

(74) Vertreter: **Raffay & Fleck
Patentanwälte
Grosse Bleichen 8
20354 Hamburg (DE)**

(54) **MESSVORRICHTUNG UND VERFAHREN ZUM MESSEN EINER SCHÜTTGUTMENGE AUS EINEM SILO**

(57) Die Erfindung betrifft eine Messvorrichtung, -system und ein Verfahren zum Bestimmen eines Massenstroms eines Mediums in einer Austragungsrinne, insbesondere einer Austragungsrinne in einem Silo, wobei g mit der erfindungsgemäßen Vorrichtung, dem erfindungsgemäßen System und der erfindungsgemäßen Verfahren eine Massenstrombestimmung auch bei unbekannter Dichter oder variabler Dichte ermittelbar ist.

Hierzu ist erfindungsgemäß neben einem Geschwindigkeitssensor und einer Auswerteeinheit auch eine Waage bzw. neben einer Erfassung einer Geschwindigkeit und einer Auswertung auch eine Erfassung der Masse vorgesehen.

Figur 1

EP 3 943 896 A1

**Beschreibung**

Die Erfindung betrifft eine Messvorrichtung, -system und ein Verfahren zum Bestimmen eines Massenstroms eines Mediums in einer Austragungsrinne, insbesondere einer Austragungsrinne in einem Silo.

Insbesondere aus einem Silo, aber auch aus anderen Behältnissen, in welchem bspw. Schüttgut verwahrt und aufbewahrt wird, soll es möglich sein, gezielt eine bestimmte Menge des in dem Silo befindlichem Material zu entnehmen bzw. abzugeben. Die Problematik liegt dabei darin, eine solche Austragung möglichst einfach, effizient und sicher zu gewährleisten und gleichzeitig die Austragsmenge zu kontrollieren oder zu messen. Letzteres ist nötig, da das Behältnis, in welches das Material aus dem Silo verbracht werden soll, in der Regel kleinere Volumina und/oder lediglich kleinere Mengen als das Silo aufweist oder lediglich bestimmte Menge beinhalten darf oder eine vorbestimmte Menge abgefüllt werden soll.

Hinsichtlich des einfachen, effizienten und sicheren Austrags aus einem Silo, insbesondere wenn es sich um Schüttgut handelt, existiert im Stand der Technik eine Vielzahl möglicher Lösungen, wobei meist eine Fluidisierung des Materials verwendet wird, um das Material sicher und schnell auszutragen. Ein solches System ist beispielsweise auch in der EP 1 816 095 A1 offenbart. Hierzu wird, in das Schüttgut Gas (Trägergas) eingeblasen, um so die Verbindung zwischen den Festkörpern des Schüttguts aufzuheben und dieses zu fluidisieren. Hierdurch wird das Schüttgut in seiner Fließeigenschaft einer Flüssigkeit ähnlicher und lässt sich besser austragen. Das Austragen und Fluidisieren erfolgt beispielsweise innerhalb einer Austragungsrinne und/oder kurz vor einer solchen. Das fluidisierte Material wird dann durch die, in der Regel ebenfalls mit einer Fluidisierungsvorrichtung versehene, Austragungsrinne aus dem Silo ausgetragen. Eine solche Austragungsrinne kann eine Rinne im herkömmlichen Sinn, oder auch eine geschlossene Rinne, also ein über seinen Umfang geschlossener Hohlkörper sein.

Um nun die Austragungsmenge zu kontrollieren kann die Fluidisierung durch Änderung des hineingeblasenen Gases gesteuert werden. Hierzu bedarf es jedoch einer Überwachung des Austragungsstroms. Auch um die Austragungsmenge zu bemessen bedarf es einer Überwachung der Austragungsmenge oder -stroms.

Hier schlägt beispielsweise die DE 10 2008 036 212 B3 eine bestimmte Messvorrichtung zur Messung von Strömungsgeschwindigkeiten fliesfähigen (fluidisiereten) Schüttguts vor. Diese Messvorrichtung umfasst zwei hintereinander angeordnete Messsonden zur Ermittlung der Geschwindigkeit und einem weiteren Sensor zur Ermittlung der Füllhöhe. Aus den so ermittelten Werten kann dann ein Volumenstrom des fluidisiereten Schüttguts in dem Messabschnitt ermittelt werden. Weiterhin kann gemäß der DE 10 2008 036 212 B3 - sofern die Dichte des Schüttguts - bekannt ist, auch ein Massenstrom aus dem Volumenstrom berechnet werden.

Insbesondere wenn die Abgabemenge des Schüttguts von besonderer Wichtigkeit ist, ist somit der Massenstrom von besonderer Relevanz. In Fällen, in denen die Dichte teils nicht bekannt ist, teils nicht konstant ist eine Erfassung des Massenstroms oder der geförderten Masse mit der Messvorrichtung der DE 10 2008 036 212 B3 nicht möglich.

Die Aufgabe der Erfindung besteht daher ein Verfahren bzw. eine Messvorrichtung bereitzustellen, bei welchem der Massenstrom auch bei unbekannter Dichter oder variabler Dichte ermittelbar ist.

Die Aufgabe wird durch ein Messvorrichtungssystem nach Anspruch 1, einer Messvorrichtung nach Anspruch 2 und einem Verfahren nach Anspruch 3 gelöst. Weitere vorteilhafte Weiterbildungen der Messvorrichtung, des Messvorrichtungssystems und/oder des Verfahrens sind durch die weiteren Unteransprüche und durch die nachfolgende Beschreibung gegeben.

Dabei ist das Messvorrichtungssystem beispielsweise als Nachrüstset für eine schon bestehenden Austragungsrinne gebildet und die Messvorrichtung als ein System mit Austragungsrinne ausgebildet und angedacht, bei der also ein Teil der schon vorhandenen Austragungsrinne ausgetauscht oder die Messvorrichtung mit Austragungsrinne als Teil der Austragungsrinne eingebaut werden soll.

Unter einer Austragungsrinne ist insbesondere eine Fluidisierungsrinne zu verstehen, also bspw. eine Austragungsrinne, in welcher ein Medium fluidisiert ausgetragen wird.

Unter einem in der Austragungsrinne bewegten Medium ist insbesondere ein Material, insbesondere ein Schüttgut zu verstehen, welches sich, vorteilhafterweise fluidisiert, in der Austragungsrinne bewegt.

Die Aufgabe wird beispielsweise durch das erfindungsgemäße Messvorrichtungssystem gelöst. Dieses Messvorrichtungssystem ist für eine Austragungsrinne gedacht und dient zum Bestimmen eines Massenstroms für und/oder in der Austragungsrinne und/oder zum Bestimmen eines Massenstroms eines durch die Austragungsrinne bewegten Mediums, dazu ist es insbesondere eingerichtet.

Das erfindungsgemäße Messvorrichtungssystem weist mindestens einen ersten Geschwindigkeitssensor, mindestens eine erste Waage und mindestens eine Auswerteeinheit auf.

Gelöst wird die Aufgabe ebenso durch eine Messvorrichtung. Die erfindungsgemäße Messvorrichtung ist dabei eingerichtet, zum Messen eines Massenstroms eines bewegten Mediums in und/oder für eine Austragungsrinne und/oder zum Bestimmen eines Massenstroms eines durch die Austragungsrinne bewegten Mediums.

Die erfindungsgemäße Messvorrichtung weist mindestens einen ersten und/oder zweiten Austragungsrinnenabschnitt, mindestens einen ersten Geschwindigkeitssensor, mindestens eine erste Waage und mindestens eine Auswerteeinheit auf.

Dabei kann der erste und/oder zweite Austragungsrinnenabschnitt beispielsweise Teil, insbesondere integraler Teil, der Austragungsrinne oder als ein Teil, also beispielsweise separaten Teil, der Austragungsrinne ausgebildet sein. So kann beispielsweise bei einem Neubau der Austragungsrinne der erfindungsgemäße Austragungsrinnenabschnitt schon Teil der Austragungsrinne sein oder bei einem Nachrüsten einer vorhanden Austragungsrinne ein der Teil vorhandenen Austragungsrinne durch den erfindungsgemäßen Austragungsrinnenabschnitt ersetzt werden.

Ferner ist der mindestens eine erste Geschwindigkeitssensor an und/oder in dem ersten und/oder zweiten Austragungsrinnenabschnitt angeordnet. Beispielsweise ist der Geschwindigkeitssensor auf oder innerhalb oder in dem Austragungsrinnenabschnitt angeordnet. Der mindestens eine erste Geschwindigkeitssensor ist zudem zum kontinuierlichen oder intermittierenden Erfassen mindestens einer Geschwindigkeit des in dem Austragungsrinnenabschnitt bewegten Mediums eingerichtet.

Die Waage der Messvorrichtung ist weiterhin mit dem mindestens einen Austragungsrinnenabschnitt verbunden und eingerichtet, zum Erfassen der Masse des im ersten und/oder zweiten Austragungsrinnenabschnitt bewegten Mediums. Vorteilhafterweise ist die mindestens eine erste Waage mit dem mindestens einen, insbesondere ersten und/oder zweiten, Austragungsrinnenabschnitt verbunden und mit dem mindestens einen, insbesondere ersten und/oder zweiten, Austragungsrinnenabschnitt zum Erfassen der Masse des im Austragungsrinnenabschnitt bewegten Mediums gekoppelt.

Zudem ist die Messvorrichtung eingerichtet, insbesondere ist oder sind der Geschwindigkeitssensor, die Waage und/oder die Auswerteeinheit eingerichtet, die mindestens eine erfasste Geschwindigkeit und mindestens eine erfasste Masse an die Auswerteeinheit zu übermitteln.

Die Auswerteeinheit der Messvorrichtung ist erfindungsgemäß eingerichtet, aus mittels basierend auf oder in Abhängigkeit von der mindestens einen ersten erfassten Geschwindigkeit, der mindestens einen ersten erfassten Masse und insbesondere mindestens einer, insbesondere vorbekannten, geometrischen Größe des Austragungsrinnenabschnitts einen Massenstrom zu berechnen.

Die Aufgabe wird weiterhin durch ein Verfahren zum kontinuierlichen oder intermittierenden, insbesondere in-situ, Bestimmen eines Massenstroms eines durch einen ersten und/oder zweiten Abschnitt einer Austragungsrinne, insbesondere eine Fluidisierungsrinne, bewegten Mediums, insbesondere eines fluidisierten Schüttguts.

Hierfür wird eine, insbesondere mittlere, Masse oder eine Masseänderung des Mediums im ersten und/oder zweiten Abschnitt erfasst. Zudem wird mittels des erfindungsgemäßen Verfahrens mindestens eine, insbesondere mittlere, Geschwindigkeit des Mediums im ersten und/oder zweiten Abschnitt erfasst.

Gemäß des erfindungsgemäßen Verfahrens wird aus und/oder basierend auf und/oder mittels und/oder in Abhängigkeit von der mindestens einen erfassten Geschwindigkeit, der mindestens einen erfassten Masse und insbesondere mindestens einer, insbesondere vorbekannten, geometrischen Größe des ersten Abschnitts der Massenstrom des Mediums in dem ersten und/oder zweiten Abschnitt bestimmt.

Erfindungsgemäß ist der mindestens eine Geschwindigkeitssensor zum kontinuierlichen oder intermittierenden Erfassen mindestens einer Geschwindigkeit eines durch mindestens einem ersten Abschnitt der Austragungsrinne bewegten Mediums eingerichtet und/oder wird eine kontinuierliche und/oder intermittierende Geschwindigkeitsmessung durchgeführt. Intermittierend bedingt insbesondere mindestens eine Messung pro 5 s, insbesondere mindestens eine Messung und/oder Erfassung pro Sekunde.

Die mindestens eine Geschwindigkeit ist insbesondere eine über den Querschnitt, insbesondere parallel und/oder senkrecht zur Erstreckung des ersten oder zweiten Abschnitts, und/oder Länge des ersten oder zweiten Abschnitts gemittelte Geschwindigkeit oder ein Geschwindigkeitsprofil über den Querschnitt, insbesondere parallel und/oder senkrecht zur Erstreckung des ersten oder zweiten Abschnitts, und/oder Länge.

Dazu umgibt der Geschwindigkeitssensor insbesondere den ersten und/oder zweiten Abschnitt und/oder den Querschnitt, insbesondere senkrecht zur Erstreckung des ersten und/oder zweiten Abschnitts, dessen Innenraums.

Ferner ist die mindestens eine Waage zum Erfassen mindestens einer ersten Masse des in einem zweiten Abschnitt der Austragungsrinne bewegten Mediums, insbesondere Materials, eingerichtet. Der zweite Abschnitt kann mit dem ersten Abschnitt identisch sein, dies ist bevorzugt. Auch können die Abschnitte überlappen oder nebeneinander oder mit einem Abstand von bis zu einem Meter angeordnet sein. Bevorzugt weisen die Abschnitte den gleichen Durchmesser oder die gleiche Breite und/oder Höhe auf. Vorteilhafterweise ist der Massenstrom, die Geschwindigkeitsverteilung und/oder die Dichteverteilung in beiden identisch, zumindest im Mittel über den Querschnitt und/über kurze Zeitspannen von zum Beispiel 1 s oder zumindest ähnlich, insbesondere besteht eine Abweichung von weniger als 10%.

Zudem ist das Messvorrichtungssystem eingerichtet, insbesondere ist oder sind der Geschwindigkeitssensor, die Waage und/oder die Auswerteeinheit eingerichtet, die mindestens eine erfasste Geschwindigkeit und mindestens eine erfasste Masse an die Auswerteeinheit zu übermitteln.

Erfindungsgemäß ist weiterhin die mindestens eine Auswerteeinheit eingerichtet, mittels und/oder basierend auf und/oder in Abhängigkeit von der mindestens einen ersten erfassten Geschwindigkeit und der mindestens einen ersten erfassten Masse einen Massenstrom zu berechnen. Insbesondere ist die mindestens eine Auswerteeinheit eingerichtet und/oder wird aus und/oder mittels und/oder basierend auf und/oder in Abhängigkeit von der mindestens einen ersten erfassten Geschwindigkeit, der mindestens einen ersten erfassten Masse und insbesondere mindestens einer, insbesondere vorbekannten und/oder vordefinierten, geometrischen Größe des ersten und/oder zweiten Abschnitts der Austragungsrinne, insbesondere dessen Querschnitts und/oder Länge, oder des Abschnitts in welchem die Masse und/oder Geschwindigkeit erfasst wird, einen Massenstrom zu berechnen.

Vorteilhafterweise handelt es sich bei der geometrischen Größe zumindest um eine Länge, insbesondere des ersten und/oder zweiten Abschnitts oder des Teils der Austragungsrinne, in dem die mindestens eine erste Masse und/oder Geschwindigkeit erfasst wird, der Waage, des Geschwindigkeitssensors oder des Austragungsrinnenabschnitts. Anstelle der Länge kann es sich jedoch auch und/oder zusätzlich um eine Fläche, Querschnittsfläche oder ein Volumen, insbesondere des genannten Abschnitts, handeln.

Unter einer geometrischen Größe, insbesondere Länge, der mindestens einen ersten Waage und/oder mindestens einen ersten Geschwindigkeitssensor ist erfindungsgemäß vorteilhafterweise die Fläche oder der wirksame Abschnitt zum Erfassen der Masse bzw. Geschwindigkeit der mindestens einen Waage bzw. des mindestens einen ersten Geschwindigkeitssensor.

Vorteilhafterweise handelt es sich bei dem Schüttgut um Kohle, Erz, Zement, Streusalz, Geröll, Schutt, Sand, Kies, Granulate, Pellets und/oder Getreide oder andere kornförmige Lebensmittel wie bspw. Reis.

Vorteilhafterweise ist der zweite Abschnitt beweglich gelagert, sodass er sich in Abhängigkeit der darin enthaltenden Masse des Mediums bewegt und/oder in Abhängigkeit der darin enthaltenden Masse des Mediums eine Kraft auf die Waage ausübt.

Der erste und/oder der zweite Abschnitt weisen insbesondere eine Länge im Bereich von 2cm bis 2m und/oder im Bereich des 0,25-fachen bis 10-fachen der größten Höhe oder Breite des ersten und/oder zweiten Abschnitts auf.

Mit Vorteil erfolgt die mindestens eine Geschwindigkeitsmessung und die mindestens eine Bestimmung der Masse gleichzeitig und/oder um maximal 5s, insbesondere maximal 1s, versetzt.

Vorteilhafterweise handelt es sich bei dem Massenstrom um eine Größe, mit der Dimension kg/s oder einem entsprechenden physikalischen Äquivalent gemessen wird. Diese kann dann aus der Geschwindigkeit (in m/s) und dem Gewicht (in kg) aufgrund der geometrischen Größe (insbesondere in m) mittels der Formel berechnet werden:

$$v \times M \div L$$

$$\left[ \frac{m}{s} \times kg \times \frac{1}{m} \right]$$

Die geometrische Größe ist insbesondere ein Maß für die Länge des gewogenen Abschnitts.

Der Vorteil des erfindungsgemäßen Verfahrens, der erfindungsgemäßen Messvorrichtung und/oder des erfindungsgemäßen Messvorrichtungssystems liegt nun darin, dass aufgrund der erfassten Masse und eben nicht mehr einer geschätzten oder als vorbekannt angenommenen Massengröße (bspw. der Dichte) der Massenstrom in-situ, unabhängiger und/oder auch bei variablen Dichten, Dichtenverteilungen oder spezifischem Gewicht des Mediums ermittelt werden kann.

Vorteilhafterweise überlappt der Abschnitt der Austragungsrinne, in dem die mindestens eine erste Masse erfasst wird, mit dem Abschnitt der Austragungsrinne, in dem die mindestens eine erste Geschwindigkeit erfasst wird, zu zumindest 70% oder alternativ wird der Abschnitt der Austragungsrinne, in dem die mindestens eine erste Masse erfasst wird, so gewählt, dass dort eine ähnliche mittlere Geschwindigkeit vorliegt wie in dem Abschnitt der Austragungsrinne, in dem die mindestens eine erste Geschwindigkeit erfasst wird, wobei der Abschnitt der Austragungsrinne, in dem die mindestens eine erste Geschwindigkeit erfasst wird, insbesondere so gewählt, dass dort eine ähnliche Masse pro Länge der Austragungsrinne vorhanden ist wie in dem Abschnitt der Austragungsrinne, in dem die mindestens eine erste Masse erfasst wird.

Unter einem in-situ Verfahren wird beispielsweis ein Verfahren erachtet, welches den Massenstrom direkt und unmittelbar ermittelt, insbesondere ohne aus dem zu messenden Abschnitt der Austragungsrinne einen Teil des Mediums zu entnehmen. Die Ermittlung findet somit beispielsweise aufgrund einer unmittelbaren Messung des Mediums und dessen Parameter, Geschwindigkeit und Massen, in dem Abschnitt der Austragungsrinne statt.

Unter einem kontinuierlichen oder intermittierenden Erfassen einer Größe des Mediums, insbesondere der Geschwindigkeit oder Masse des Mediums, insbesondere jeweils, in einem Abschnitt der Austragungsrinne, ist insbesondere ein Erfassen in vorbestimmten Abständen, deren zeitliche Länge auch gegen Null gehen können, zu verstehen, also insbesondere ein automatisches Erfassen oder insbesondere nicht ein Erfassen zu manuell ausgelösten Zeitpunkten.

Insbesondere werden die Messungen wiederholt, insbesondere mindestens alle 5 Sekunden, insbesondere für mindestens eine Dauer von 30 Sekunden.

Vorteilhafterweise erfasst der mindestens eine erste Geschwindigkeitssensor, insbesondere während eines ersten Zeitraums, mindestens eine erste Mehrzahl von Geschwindigkeiten, wobei das Messvorrichtungssystem oder die Messvorrichtung, insbesondere der Geschwindigkeitssensor und/oder die Auswerteeinheit, eingerichtet ist, aus der mindestens einen ersten Mehrzahl von Geschwindigkeiten mindestens eine erste durchschnittliche Geschwindigkeit zu ermitteln.

Vorteilhafterweise erfasst die mindestens eine erste Waage, insbesondere während eines ersten Zeitraums, mindestens eine zweite Mehrzahl von Massen, wobei das Messvorrichtungssystem oder die Messvorrichtung, insbesondere die Waage und/oder die Auswerteeinheit, eingerichtet ist, aus der mindestens einen zweiten Mehrzahl von Massen mindestens eine erste durchschnittliche Masse zu ermitteln.

Mit Vorteil werden die erste Mehrzahl von Messungen, die zweite Mehrzahl von Messungen und oder die ermittelten Durschnitte zur Ermittlung des mindestens einen Massenstroms verwendet.

Vorteilhafterweise sind der mindestens eine erste Geschwindigkeitssensor und die mindestens eine erste Waage an demselben Austragungsrinnenabschnitt angeordnet bzw. mit diesem verbunden. Alternativ kann der mindestens eine erste Geschwindigkeitssensor an einem ersten Austragungsrinnenabschnitt angeordnet sein und die mindestens eine erste Waage mit einem zweiten Austragungsrinnenabschnitt verbunden sein.

Vorteilhafterweise ist der Bereich bzw. der Abschnitt der Austragungsrinne, an dem die Waage angeordnet ist, von weiteren Bereichen bzw. Abschnitten der Austragungsrinne und/oder dem Rest der Austragungsrinne entkoppelt, sodass insbesondere die Waage lediglich die Masse des entkoppelten Bereichs bzw. Abschnitts der Austragungsrinne, an dem die Waage angeordnet ist, bei der Erfassung der Masse des bewegten Mediums berücksichtigt.

Vorteilhafterweise ist die mindestens eine erste Waage zum Speichern und/oder Versenden der mindestens einen ersten erfassten Masse eingerichtet.

Vorteilhafterweise ist die mindestens eine erste Geschwindigkeitssensor zum Speichern und/oder Versenden der mindestens einen ersten erfassten Geschwindigkeit eingerichtet.

Vorteilhafterweise ist die mindestens eine Auswerteeinheit zum Speichern und/oder Empfangen der mindestens einen ersten erfassten Geschwindigkeit, insbesondere Empfangen von dem mindestens einen ersten Geschwindigkeitssensor, und der mindestens einen ersten erfassten Masse, insbesondere Empfangen von der mindestens einen ersten Waage, eingerichtet.

Vorteilhafterweise weist der Geschwindigkeitssensor mindestens ein, insbesondere dreh-, steifes und/oder antriebsloses und/oder keine Drehung zulassendes und/oder keine drehbaren Teile aufweisendes Sensorelement auf und/oder ist er zur antriebslosen Messung eingerichtet und/oder wird die Geschwindigkeitsmessung antriebslos durchgeführt, beispielsweise kein Rotor durch das Medium gedreht, um dessen Drehung als Maß für die Geschwindigkeit zu verwenden. Insbesondere handelt es sich bei dem Sensorelement nicht um einen Rotor.

Vorteilhafterweise ist das Sensorelement eingerichtet, mit einem Abschnitt der Austragungsrinne zumindest teilweise in, insbesondere direkten und/oder unmittelbaren, Kontakt zu stehen und/oder an diesen anzugrenzen oder durch diesen zumindest teilweise zu stoßen.

Vorteilhafterweise ist das Sensorelement eingerichtet, zumindest teilweise in das vom dem Austragungsrinnenabschnitt und/oder Abschnitt der Austragungsrinne und/oder dem ersten Abschnitt der Austragungsrinne aufgespannten oder umschlossenen Volumen einzuwirken und/oder Informationen von diesem Volumen aufzunehmen und/oder zu erfassen und/oder dieses zu umgeben.

Vorteilhafterweise handelt es sich bei dem Sensorelement um einen triboelektrischen Sensor, beispielsweise wie aus der DE 10 2008 036 212 B3 bekannt oder einem Geschwindigkeitsmessgerät für Feststoffe des Typs SpeedFlow 2.0-Pile der Firma envea™ SWR engineering GmbH.

Mit besonderem Vorteil ist der Geschwindigkeitssensor und/oder das Sensorelement fest und/oder lösbar an dem ersten und/oder zweiten Abschnitt festgelegt und/oder an dem ersten und/oder zweiten Abschnitt angeordnet.

Vorteilhafterweise grenzt und/oder liegt die mindestens eine erste Waage an einem Abschnitt der Austragungsrinne und/oder dem ersten Abschnitt der Austragungsrinne und dem Austragungsrinnenabschnitt an und/oder ist sie damit verbunden.

Vorteilhafterweise ist die mindestens eine erste Waage dazu eingerichtet, eine Messung an und/oder in Verbindung mit einem Abschnitt der Austragungsrinne und/oder dem ersten Abschnitt der Austragungsrinne und/oder dem Austragungsrinnenabschnitt durchzuführen.

Vorteilhafterweise erfolgt die Messung der Masse des Mediums durch eine Messung an und/oder in Verbindung mit einem Abschnitt der Austragungsrinne und/oder dem ersten Abschnitt der Austragungsrinne und/oder dem Austragungsrinnenabschnitt.

Vorteilhafterweise ist die Auswerteeinheit zumindest sowohl mit der mindestens einen ersten Waage als auch der mindestens einen ersten Geschwindigkeitssensor verbunden. Insbesondere erfolgt die Verbindung mittels mindestens einer Datenverbindung, insbesondere kabel- und/oder funkbasiert. Insbesondere ist die Auswerteeinheit mittels einer Datenverbindung sowohl mit der mindestens einen ersten Waage als auch dem mindestens einen ersten Geschwindigkeitssensor verbunden.

Vorteilhafterweise wird das erfindungsgemäße Verfahren mittels einer erfindungsgemäßen Messvorrichtung oder eines erfindungsgemäßen Messvorrichtungssystem durchgeführt.

Vorteilhafterweise wird auf der erfindungsgemäßen Messvorrichtung oder dem erfindungsgemäßen Messvorrichtungssystem das erfindungsgemäße Verfahren durchgeführt.

Vorteilhafterweise wird auf der erfindungsgemäßen Messvorrichtung oder dem erfindungsgemäßen Messvorrichtungssystem der Massenstrom mittels des erfindungsgemäßen Verfahrens durchgeführt und/oder ist sie dazu eingerichtet. Insbesondere weist sie eine Steuereinheit aus, die eingerichtet ist, die Vorrichtung so anzusteuern, dass sie das erfindungsgemäße Verfahren durchführt.

Vorteilhafterweise werden einzelne Aspekte der erfindungsgemäßen Messvorrichtung oder des erfindungsgemäßen Messvorrichtungssystems oder deren vorteilhaften Weiterbildungen in dem erfindungsgemäßen Verfahren verwendet.

Vorteilhafterweise werden einzelne Aspekte der erfindungsgemäßen Messvorrichtung oder dessen vorteilhaften Weiterbildungen in dem erfindungsgemäßen Messvorrichtungssystem verwendet. Vorteilhafterweise werden einzelne Aspekte des erfindungsgemäßen Messvorrichtungssystem oder dessen vorteilhaften Weiterbildungen in der erfindungsgemäßen Messvorrichtung verwendet.

Vorteilhafterweise werden einzelne Aspekte des erfindungsgemäßen Verfahrens oder dessen vorteilhaften Weiterbildungen in der erfindungsgemäßen Messvorrichtung oder dem erfindungsgemäßen Messvorrichtungssystems verwendet. Weitere Vorteile und Merkmale der Erfindung ergeben sich aus der nachstehenden Beschreibung eines Ausführungsbeispiels anhand der beigefügten Figuren. Dabei zeigen:

Fig. 1    eine Ausführungsform einer erfindungsgemäßen Messvorrichtung mit einer Auswerteeinheit, einem Geschwindigkeitssensor und einer Waage an einer Austragungsrinne in einer perspektivischen Darstellung, und

Fig. 2    unterschiedliche Ausgestaltungen und Anordnungen eines Geschwindigkeitssensor bzw. einer Waage an einer Austragungsrinne in einer Querschnittsdarstellung.

Die Figuren sind exemplarisch und rein schematisch und beschränken sich in ihrer Darstellung auf die für das Verständnis der Erfindung wichtigen und wesentlichen Merkmale.

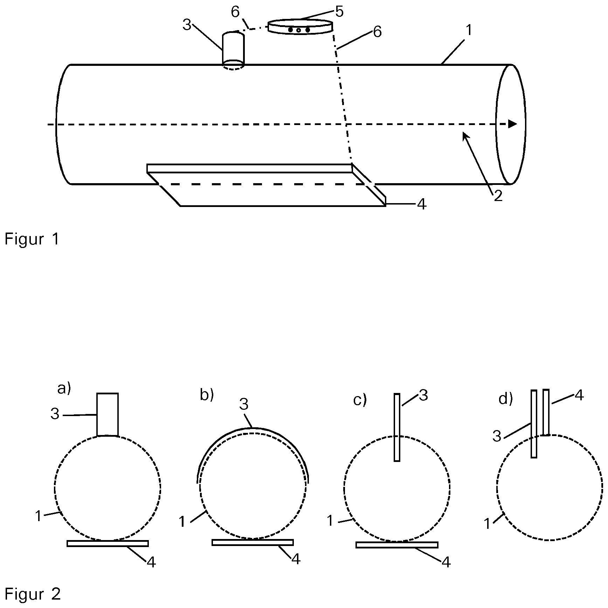

In der Figur 1 ist in einer perspektivischen Darstellung ein Schema eines erfindungsgemäßen Ausführungsbeispiels des erfindungsgemäßen Messvorrichtungssystems an einer Austragungsrinne 1 als erfindungsgemäße Messvorrichtung gezeigt, mithilfe dessen das erfindungsgemäße Verfahren durchgeführt werden kann.

In der Figur 1 wird lediglich ein Abschnitt bzw. Bereich der Austragungsrinne 1 dargestellt. Dabei umfasst die erfindungsgemäße Messvorrichtung diesen Austragungsrinnenabschnitt 1 wohingegen das erfindungsgemäße Messvorrichtungssystem an einem schon vorhandenen Abschnitt der Austragungsrinne 1 angeordnet ist. Ferner ist die Austragungsrinne 1 als eine zylinderförmige Austragungsrinne 1 dargestellt, wobei die Erfindung auf eine solche Ausgestaltungsform der Austragungsrinne 1 nicht beschränkt ist. Ebenso ist eine Austragungsrinne 1 in Form eines Halbzylinders (oder einer Form zwischen Vollzylinder und Halbzylinder) Teil der Erfindung sowie eine quaderförmige Austragungsrinne 1 (diese ebenso möglicherweise abgeschnitten nach oben) oder andere ovale oder eckige Formen der Austragungsrinne 1.

In der Austragungsrinne 1 wird ein Medium (nicht gezeigt), wie zum Beispiel ein Schüttgut, in Fließrichtung 2, in dem von der Austragungsrinne 1 aufgespanntem Volumen bewegt. So kann beispielsweise Schüttgut aus einem Silo in ein anderes Behältnis, bspw. in einen Container eines LKW's, überführt werden.

Erfindungsgemäß ist an der Austragungsrinne 1 ein Geschwindigkeitssensor 3 angeordnet. Mithilfe des Geschwindigkeitssensors 3 wird die Geschwindigkeit des in dem Bereich der Austragungsrinne 1, in dem der Geschwindigkeitssensor 3 angeordnet ist, in Fließrichtung 2 bewegten Mediums gemessen. Hierzu kann beispielsweise en triboelektrischer Geschwindigkeitssensor 3 verwendet werden, der das durch die Reibung des Mediums generierte elektrische Feld misst. Insbesondere wird ein triboelektrischen Geschwindigkeitssensor wie aus der DE 10 2008 036 212 B3 bekannt oder einem Geschwindigkeitsmessgerät für Feststoffe des Typs SpeedFlow 2.0-Pile der Firma envea™ SWR engineering GmbH verwendet.

Ferner ist erfindungsgemäß eine Waage 4 an der Austragungsrinne 1 angeordnet. Mithilfe der Waage 4 wird die Masse des in dem Bereich der Austragungsrinne 1, in dem die Waage 4 angeordnet ist, in Fließrichtung 2 bewegten Mediums gemessen. Dabei kann insbesondere die Masse der Austragungsrinne 1 von der gemessenen Masse abgezogen werden und somit eine um die Tara bereinigte Masse erfasst werden, insbesondere ist die Waage 4 oder eine, später noch näher erläuterte Auswerteinheit 6 dazu eingerichtet.

Diese Waage 4 kann in dem identischen Bereich der Austragungsrinne 1 angeordnet sein wie der Geschwindigkeitssensor 3. Hierdurch wird sowohl die Masse als auch die Geschwindigkeit des Mediums im selben Abschnitt der Austragungsrinne 1 ermittelt, wodurch der Massenstrom genauer bestimmt werden kann, da nun Schwankungen im Verlauf der Austragungsrinne 1 in Fließrichtung 2 auf den so bestimmten Massenstrom keinen Einfluss haben. Sollten Diese jedoch unerheblich oder anderweitig bestimmbar sein, ist es auch möglich, dass die Waage 4 und der Geschwindigkeitssensor 3 in jeweils unterschiedlichen Bereichen der Austragungsrinne 1 angeordnet sind.

Insbesondere sind Waage 4 und/oder Geschwindigkeitssensor 3 eingerichtet, die Masse und/oder Geschwindigkeit kontinuierlich und/oder in Intervallen zu messen und insbesondere einen Durchschnitt mehrerer gemessener Massen und/oder Geschwindigkeiten zu ermitteln.

Weiterhin ist erfindungsgemäß eine Auswerteeinheit 5 mittels einer Datenverbindung 6 mit der Waage 4 und dem Geschwindigkeitssensor 3 verbunden. Bei der Datenverbindung 6 kann es sich um eine kabelgebundene oder kabellose Datenverbindung oder eine Kombination beider, beispielsweise unter Zuhilfenahme eines Accespoints, handeln. Die Auswerteeinheit kann in der Nähe der Austragungsrinne 1 oder entfernt angeordnet sein. Insbesondere kann die Auswerteeinheit 6 auch Teil eines Computersystems oder eines Netzwerkes oder Servers sein. Mithilfe der Datenverbindung 6 hat die Auswerteinheit 5 Zugang zu den gemessenen Massen der Waage 4 und gemessenen Geschwindigkeiten des Geschwindigkeitssensors 3, beispielsweise durch Senden und/oder Abrufen dieser Daten. Die Auswerteinheit 5 ist eingerichtet basierend auf den Massedaten und Geschwindigkeitsdaten einen Massenstrom zu berechnen. Insbesondere berechnet die Auswerteeinheit 5 den Massenstrom aus der in dem Austragungsrinnenabschnitt 1 erfassten Masse (M, beispielsweise in kg) und Geschwindigkeit (v, beispielsweise in m/s) und sowie aus der vorbekannten Länge (L, beispielsweise in m) des gewogenen Austragungsabschnitts mittels der Formel:

$$v \times M \div L$$

$$\left[\frac{m}{s} \times kg \times \frac{1}{m}\right]$$

In der Figur 2 sind weitere, jedoch nicht abschließende, mögliche Ausgestaltungen, insbesondere Anordnungen der Waage 4 bzw. des Geschwindigkeitssensors 3, in einer Querschnittsdarstellung durch den Austragungsrinnenabschnitt 1 dargestellt, wobei Figur 2 a) die Anordnung in der Figur 1 wiederspiegelt. In der Figur 2 b) ist der Geschwindigkeitssensor 3 als Halbkreis ausgebildet und an dem Außenumfang der Austragungsrinne 1 angeordnet. Der Geschwindigkeitssensor kann jedoch auch diesen Teil des Außenumfangs der Austragungsrinne 1 ersetzen.

In der Figur 2 c) ist der Geschwindigkeitssensor 3 an der Austragungsrinne 1 derart angeordnet, dass der Geschwindigkeitssensor 3 in das von der Austragungsrinne 1 aufgespannte Volumen, das Innenvolumen der Austragungsrinne 1, reicht.

In der Figur 2 d) ist eine alternative Anordnung der Waage 4 dargestellt. Bei den Ausgestaltungen der Figuren 2 a) bis 2 c) ist die Waage 4 unterhalb der Austragungsrinne 1 angeordnet, wohingegen in der Ausgestaltung, wie in der Figur 2 d) gezeigt, die Waage 4 oben an der Austragungsrinne 1 angeordnet ist.

Weitere unterschiedliche Anordnungen der Waage 4 und des Geschwindigkeitssensors 3 sind vorstellbar, ohne dass hierdurch die Lehre der Erfindung beeinträchtigt wird.

Bezugszeichenliste

1    Austragungsrinne bzw. Austragungsrinnenabschnitt
2    Fließrichtung des bewegten Mediums
3    Geschwindigkeitssensor
4    Waage
5    Auswerteeinheit
6    Datenverbindung

**Patentansprüche**

1.   Messvorrichtungssystem zum Bestimmen eines Massenstroms in einer Austragungsrinne (1), insbesondere eine Fluidisierungsrinne, aufweisend

mindestens einen ersten Geschwindigkeitssensor (3) zum kontinuierlichen oder intermittierenden Erfassen mindestens einer Geschwindigkeit eines durch mindestens einen ersten Abschnitt der Austragungsrinne (1) bewegten (2) Mediums,
aufweisend mindestens eine erste Waage (4) zum Erfassen mindestens einer ersten Masse des in einem zweiten Abschnitt der Austragungsrinne (1) bewegten (2) Mediums und
aufweisend mindestens eine Auswerteeinheit (5),
wobei das Messvorrichtungssystem, insbesondere Geschwindigkeitssensor (3), Waage (4) und/oder Auswerteeinheit (5), eingerichtet ist/sind, die mindestens eine erfasste Geschwindigkeit und mindestens eine erfasste Masse an die Auswerteeinheit (5) zu übermitteln,
wobei die Auswerteeinheit (5) eingerichtet ist, aus, mittels, basierend auf oder in Abhängigkeit von der mindestens einen ersten erfassten Geschwindigkeit und der mindestens einen ersten erfassten Masse einen Massenstrom zu berechnen.

2.   Messvorrichtung zum Messen eines Massenstroms eines bewegten Mediums durch eine Austragungsrinne (1), insbesondere eine Fluidisierungsrinne, aufweisend

mindestens einen Austragungsrinnenabschnitt (1), und
aufweisend mindestens einen ersten an dem mindestens einen Austragungsrinnenabschnitt (1) angeordneten Geschwindigkeitssensor (3) zum kontinuierlichen oder intermittierenden Erfassen mindestens einer Geschwindigkeit des in dem Austragungsrinnenabschnitt (1) bewegten (2) Mediums und

aufweisend mindestens eine erste mit dem mindestens einen Austragungsrinnenabschnitt (1) verbundene und mit dem mindestens einen Austragungsrinnenabschnitt (1) zum Erfassen der Masse des im Austragungsrinnenabschnitt (1) bewegten (2) Mediums gekoppelte Waage (4) und

aufweisend eine Auswerteeinheit (5),

wobei die Messvorrichtung, insbesondere der Geschwindigkeitssensor (3), die Waage (4) und/oder die Auswerteeinheit (5), eingerichtet ist/sind, die mindestens eine erfasste Geschwindigkeit und mindestens eine erfasste Masse an die Auswerteeinheit (5) zu übermitteln,

wobei die Auswerteeinheit (5) eingerichtet ist, aus, mittels, basierend auf oder in Abhängigkeit von der mindestens einen ersten erfassten Geschwindigkeit und der mindestens einen ersten erfassten Masse einen Massenstrom zu berechnen.

3. Verfahren zum kontinuierlichen oder intermittierenden, insbesondere in-situ, Bestimmen eines Massenstroms eines durch einen Austragungsrinnenabschnitt (1), insbesondere einer Fluidisierungsrinne, bewegten (2) Mediums, insbesondere eines fluidisierten Schüttguts, in dem Austragungsrinnenabschnitt (1), wobei

eine, insbesondere mittlere, Masse oder eine Masseänderung des durch den Austragungsrinnenabschnitt (1) bewegten (2) Mediums erfasst wird,

eine, insbesondere mittlere, Geschwindigkeit des durch den Austragungsrinnenabschnitt bewegten (2) Mediums erfasst wird, und wobei

aus, basierend auf, mittels oder in Abhängigkeit von der erfassten Masse und der erfassten Geschwindigkeit des Mediums der Massenstrom des Mediums in dem Austragungsrinnenabschnitt bestimmt wird.

4. Messvorrichtung oder Messvorrichtungssystem oder Verfahren nach einem der voranstehenden Ansprüchen **dadurch gekennzeichnet, dass** der Geschwindigkeitssensor (3) mindestens ein oder die Erfassung der mindestens einen ersten Geschwindigkeit mittels mindestens einem, insbesondere dreh-, steifes/n und/oder keine Drehung zulassendes/n und/oder keine drehbaren Teile aufweisendes/n Sensorelement (3) aufweist oder erfolgt und/oder die Erfassung antriebslos erfolgt und/oder der Geschwindigkeitssensor (3) zur antriebslosen Erfassung der mindestens einen ersten Geschwindigkeit eingerichtet ist.

5. Messvorrichtung oder Messvorrichtungssystem oder Verfahren nach dem voranstehenden Anspruch **dadurch gekennzeichnet, dass** der Geschwindigkeitssensor (3) und/oder das Sensorelement (3) eingerichtet ist, mit einem Abschnitt der Austragungsrinne (1) zumindest teilweise in, insbesondere direkten und/oder unmittelbaren, Kontakt zu stehen oder an diesen anzugrenzen oder durch diesen zumindest teilweise zu stoßen, wobei der Geschwindigkeitssensor (3) und/oder das Sensorelement (3) insbesondere weiterhin eingerichtet ist, zumindest teilweise in das vom dem Austragungsrinnenabschnitt (1) und/oder Abschnitt der Austragungsrinne (1) und/oder dem ersten Abschnitt der Austragungsrinne (1) aufgespannten oder umschlossenen Volumen einzuwirken und/oder Informationen von diesem Volumen aufzunehmen und/oder zu erfassen.

6. Messvorrichtung oder Messvorrichtungssystem oder Verfahren nach einem der zwei voranstehenden Ansprüche **dadurch gekennzeichnet, dass** das mindestens eine Sensorelement (3) und/oder der mindestens eine Geschwindigkeitssensor (3) ein triboelektrischer Sensor ist.

7. Messvorrichtung oder Messvorrichtungssystem oder Verfahren nach einem der voranstehenden Ansprüchen **dadurch gekennzeichnet, dass** die mindestens eine erste Waage (4) an und/oder mit einen/einem Abschnitt der Austragungsrinne (1) und/oder den/dem ersten Abschnitt der Austragungsrinne (1) und den/dem Austragungsrinnenabschnitt (1) angrenzt, anliegt und/oder verbunden ist oder dazu eingerichtet oder die Messung der Masse des Mediums durch eine Messung an und/oder in Verbindung mit einem Abschnitt der Austragungsrinne (1) und/oder dem ersten Abschnitt der Austragungsrinne (1) und/oder dem Austragungsrinnenabschnitt (1) erfolgt.

8. Messvorrichtung oder Messvorrichtungssystem oder Verfahren nach einem der voranstehenden Ansprüchen **dadurch gekennzeichnet, dass** die Auswerteeinheit (5) zumindest sowohl mit der mindestens einen ersten Waage (4) als auch der mindestens einen ersten Geschwindigkeitssensor (3) verbunden (6) ist, insbesondere mittels, insbesondere jeweils, mindestens einer Datenverbindung (6), und/oder dazu eingerichtet ist, die mindestens eine erste erfasste Geschwindigkeit und die mindestens eine erste erfasste Masse zu empfangen und/oder abzurufen.

Figur 1

Figur 2

Europäisches Patentamt
European Patent Office
Office européen des brevets

## EUROPÄISCHER RECHERCHENBERICHT

Nummer der Anmeldung

EP 20 18 7210

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/25732 A1 (DYNATECHNIK MESSSYSTEME GMBH [DE]; NAGEL RALF [DE]; DYBECK KLAUS [DE]) 12. April 2001 (2001-04-12) * Zusammenfassung; Abbildungen 1,2,4-6 * * Seite 1, Zeilen 1-10 * * Seite 4, Zeilen 10-23 * * Seite 7, Zeile 11 - Seite 8, Zeile 25 * * Seite 10, Zeilen 12-27 * * Seite 11, Zeile 23 - Seite 12, Zeile 6 * ----- | 1-8 | INV. G01G11/00 |
| X | EP 1 205 737 A2 (SEG MEKANIK AB [SE]) 15. Mai 2002 (2002-05-15) * Zusammenfassung; Abbildungen 1-4 * * Absätze [0002], [0007], [0011], [0012], [0018], [0019], [0021], [0023] - [0025] * ----- | 1-8 | |
| X | US 5 576 499 A (DAVIES CLIVE ERIC [NZ]) 19. November 1996 (1996-11-19) | 1-3 | |
| A | * Zusammenfassung; Abbildungen 1-4 * * Spalte 7, Zeilen 21-50 * ----- | 4-8 | |
| A | GB 1 587 906 A (LOCKWOOD GRADERS LTD) 15. April 1981 (1981-04-15) * Abbildungen 1-3 * * Seite 2, Zeilen 39-130 * * Seite 3, Zeilen 59-68 * ----- | 1-3,6 | RECHERCHIERTE SACHGEBIETE (IPC) G01G |

Der vorliegende Recherchenbericht wurde für alle Patentansprüche erstellt

| Recherchenort | Abschlußdatum der Recherche | Prüfer |
|---|---|---|
| Den Haag | 15. Januar 2021 | Mihai Vasile |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 18 7210

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2021

| Im Recherchenbericht angeführtes Patentdokument | Datum der Veröffentlichung | Mitglied(er) der Patentfamilie | Datum der Veröffentlichung |
|---|---|---|---|
| WO 0125732 A1 | 12-04-2001 | DE 19947394 A1<br>EP 1216399 A1<br>WO 0125732 A1 | 03-05-2001<br>26-06-2002<br>12-04-2001 |
| EP 1205737 A2 | 15-05-2002 | EP 1205737 A2<br>US 2002056325 A1 | 15-05-2002<br>16-05-2002 |
| US 5576499 A | 19-11-1996 | AU 4093193 A<br>CA 2133343 A1<br>GB 2280511 A<br>JP H07506189 A<br>NZ 242499 A<br>US 5576499 A<br>WO 9322652 A1 | 29-11-1993<br>11-11-1993<br>01-02-1995<br>06-07-1995<br>26-06-1998<br>19-11-1996<br>11-11-1993 |
| GB 1587906 A | 15-04-1981 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1816095 A1

- DE 102008036212 B3